**Europäisches Patentamt**

**European Patent Office**

**Office européen des brevets**

(19)

(11) Veröffentlichungsnummer: **0 226 809**
**B1**

(12) ## EUROPÄISCHE PATENTSCHRIFT

(45) Veröffentlichungstag der Patentschrift:
**18.10.89**

(51) Int. Cl.⁴: **B 23 K 3/00**

(21) Anmeldenummer: **86115852.5**

(22) Anmeldetag: **14.11.86**

(54) **Lötgarnitur für Montagearbeiten.**

(30) Priorität: **14.12.85 DE 8535228 U**

(43) Veröffentlichungstag der Anmeldung:
**01.07.87 Patentblatt 87/27**

(45) Bekanntmachung des Hinweises auf die Patenterteilung:
**18.10.89 Patentblatt 89/42**

(84) Benannte Vertragsstaaten:
**AT BE CH DE FR GB LI LU NL SE**

(56) Entgegenhaltungen:
**DD-A- 128 078**
**US-A- 4 118 821**
**US-A- 4 139 138**

(73) Patentinhaber: **Backhausen, Karl-Heinz, Kösliner Strasse 18, D-5000 Köln 60 (DE)**
Patentinhaber: **Backhausen, Alfred, Dohlenweg 24, D-5000 Köln 30 (DE)**

(72) Erfinder: **Backhausen, Karl-Heinz, Kösliner Strasse 18, D-5000 Köln 60 (DE)**
Erfinder: **Backhausen, Alfred, Dohlenweg 24, D-5000 Köln 30 (DE)**

(74) Vertreter: **Eggert, Hans-Gunther, Dr., Räderscheidtstrasse 1, D-5000 Köln 41 (DE)**

## Beschreibung

Die Erfindung betrifft eine Lötgarnitur für Montagearbeiten, insbesondere an Dächern oder Dachrinnen.

Bei der Durchführung von Lötarbeiten ist es bisher üblich, das Löthilfsmittel, beispielsweise Salzsäure, direkt aus einem Transportbehälter, insbesondere aus einem Kunststoff-Fläschchen, mittels eines Pinsels auf die Lötnaht aufzustreichen. Dies hat den Nachteil, daß der Pinsel mehr oder weniger tief in den Transportbehälter eindringt, dadurch stark wechselnde Mengen Lötwasser aufnimmt und dementsprechend eine genaue und zuverlässige Dosierung nicht möglich ist.

Von Nachteil ist aber auch, daß der Lötwasserbehälter an schwierigen Stellen, beispielsweise an schrägen Dächern oder auch Dachrinnen in der Regel keinen sicheren Stand hat und daher die Gefahr gegeben ist, daß er umfällt und das in ihm enthaltene Material ausfließt. Dies ist insbesondere bei der stark ätzenden Salzsäure sowohl für Handwerker, als auch für die Umgebung und das Bedachungsmaterial von erheblicher Gefahr.

Zum Reinigen des Lötkolbens wird bisher ein Salmiakstein benutzt, der beim Reinigen der Lötbahn des Lötkolbens mit einer Hand festgehalten werden muß. Da der die Lötarbeiten Ausführende in der anderen Hand den Lötkolben hält, also keine Hand mehr frei hat, besteht eine große Unfallgefahr, insbesondere an schwierigen Stellen wie z.B. an schrägen Dächern.

Durch die US-A-4 139 138 ist eine Lötstation bekannt, die einen für die Aufnahme von Werkzeugen oder dergleichen durch Zwischenwände in mehrere Abteilungen unterteilten und mit einer als Arbeitstisch dienende Deckplatte versehenen Behälter aufweist. Diese Lötstation weist darüberhinaus Halterungen auf, die es ermöglichen sollen, zu schweißende Teile in günstiger Position auf der Deckplatte festzuhalten und insbesondere auch in Bezug auf eine ebenfalls vorgesehene Lichtquelle vorteilhaft zu plazieren.

Durch die US-A-4 118 821 ist auch eine Einrichtung zum Reinigen der Lötkolbenspitze von überschüssigem Lötzinn, verbranntem Flußmittel usw. bekannt, bei der in einem aus einer Bodenplatte und einer seitlichen Umrandung gebildeten Behälter ein Wasservorratsbehälter angeordnet ist, der über einen Feuchtigkeit ansaugenden Docht mit einem darüber befindlichen Schwamm in Verbindung steht, um letzteren über einen längeren Zeitraum hinweg gleichmäßig feucht zu halten, damit dieser beim Abstreifen bzw. Reinigen der Lötspitze in einer im Schwamm vorgesehenen zentralen Ausnehmung nicht verbrannt wird.

Durch die DD-A-128 078 ist desweiteren ein Lötkolbenständer bekannt, der auf einer Grundplatte, die zur Erhöhung der Standfestigkeit mit Saugfüßen versehen ist, kleine Behälter für die Aufnahme von Lötzinn und Fließmitteln sowie zum Schutz gegen unbeabsichtigte Berührung der heißen Teile des abgelegten Lötkolbens einen beim Einlegen des Lötkolbens sich durch dessen Eigengewicht schließenden und beim Wiederaufnehmen des Lötkolbens öffnenden zweiteiligen Schutzkorb aufweist.

Durch keine der bekannten Einrichtungen werden die eingangs erwähnten Nachteile vermieden. Die Erfindung macht es sich daher zur Aufgabe, eine Lötgarnitur für Montagearbeiten zu schaffen, die ein sicheres und einwandfreies Arbeiten auch unter die schwierigen Bedingungen, beispielsweise an schrägen Dächern, gewährleistet.

Die erfindungsgemäße Aufgabe wird durch eine Lötgarnitur für Montagearbeiten mit auf einer Grundplatte ausgebildetem Rahmen für die Aufnahme von Werkzeugen gelöst, bei der der Rahmen für die Aufnahme eines Salmiaksteins ausgebildet ist, bei der auf der Grundplatte ein offener Behälter für ein flüssiges Löthilfsmittel aus gegen dieses beständigem Kunststoff sowie eine Befestigung für einen Lötwasserpinsel angeordnet und ausgebildet sind und bei der die Grundplatte ferner mit einer rutschfesten Unterlage aus Elastomeren, insbesondere aus geschäumten Elastomeren vorgesehen ist, wobei die Grundplatte und die rutschfeste Unterlage längs einer Seite, vorzugsweise längs einer Längsseite mittels eines Scharniers oder dergleichen auseinanderklappbar verbunden sind und eine Ausstellvorrichtung zum einstellbaren winkligen Auseinanderklappen der Grundplatte und der rutschfesten Unterlage aufweisen.

Die Anordnung des auswechselbaren Salmiaksteins auf der Grundplatte erfolgt vorteilhaft so, daß beim Abstreifen des Lötkolbens dessen Lötbahn den Salmiakstein sicher und auf der ganzen Länge erreicht, wozu die Fläche des Salmiaksteins zweckmäßig so groß bemessen wird, daß sie größer ist als die Länge der Lötkolbenbahn.

Günstig ist es, nach einem weiteren Vorschlag der Erfindung die gesamte Lötgarnitur aus einem gegen Salzsäure beständigen Kunststoff herzustellen. Besonders vorteilhaft ist es, die Breite der Grundplatte genau so zu bemessen, daß sie in eine Dachrinne paßt.

Weiterhin sieht die Erfindung eine Halterung für die Lötmittelflasche auf der Grundplatte vor. Anstelledessen oder auch zusätzlich kann ein an der Grundplatte befestigter, vorzugsweise einstückig angeformter, Vorratsbehälter für das flüssige Löthilfsmittel vorgesehen werden. Für den Fall der Anordnung sowohl einer Halterung für die Flasche wie auch eines offenen Vorratsbehälters ergibt sich die besonders günstige Möglichkeit, den Vorratsbehälter mittels eines Hahns direkt aus der Flasche mit jeweils der erforderlichen Menge Löthilfsmittel zu füllen.

In zweckmäßiger weiterer Ausbildung der Erfindung ist vorgesehen, den Rahmen für den Salmiakstein mit einem Deckel zu versehen. Dieser kann schwenkbar am Rahmen befestigt oder aber als über den Rahmen stülpbare Haube ausgebildet sein. Für die Befestigung des Lötwasserpinsels ist vorgesehen, diese als beidseitig offenes Röhrchen auszubilden und dieses gegebenenfalls neben dem Rahmen auf der Grundplatte anzuordnen. Dazu kann auch noch vorgesehen werden, das zum Behälter für die Aufnahme des Löthilfsmittels hin gerichtete Ende des Röhrchens unter einem Winkel von 45° abzuschrägen.

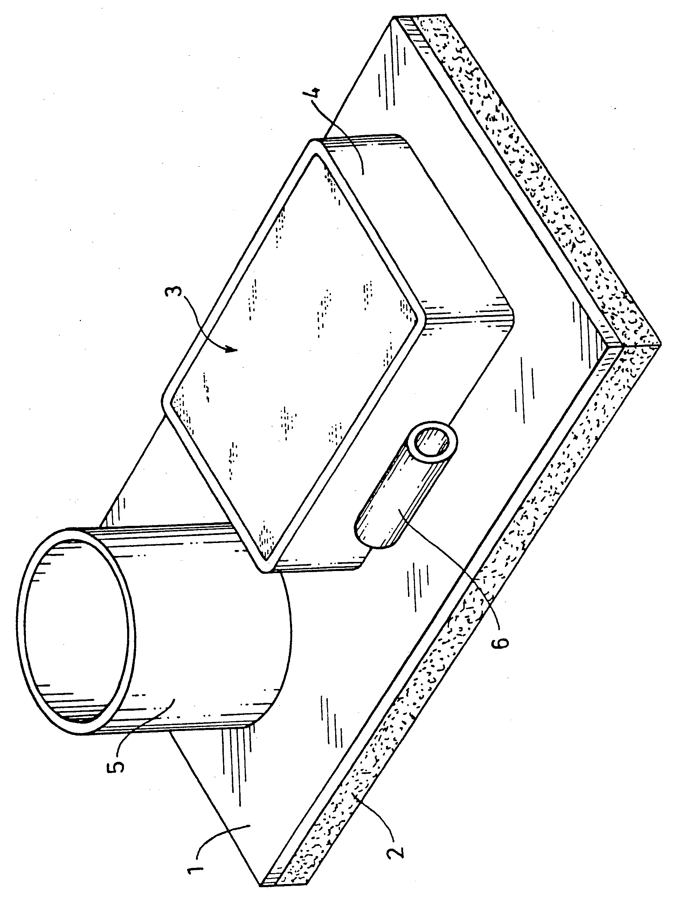

Die Erfindung ist in der Zeichnung in einem Ausführungsbeispiel gezeigt und wird anhand dieses nachstehend erläutert.

Auf der Grundplatte 1 aus einem gegen Salzsäure beständigen Kunststoff mit rutschfester Unterlage 2, beispielsweise aus einem geschäumten Elastomeren, ist für die Aufnahme des Salmiaksteins 3 der Rahmen 4 angeordnet. Für die Aufnahme des flüssigen Löthilfsmittels ist der offene Behälter 5 auf der Grundplatte 1 vorgesehen und für die Aufnahme eines nicht gezeigten Pinsels das Rohrstück 6. Vorteilhaft sind diese Teile aus einem Stück geformt. Zusätzlich zu dem Behälter 5 könnte noch eine Halterung für eine Löthilfsmittelflasche vorgesehen werden, wobei die flächige Anordnung dann entsprechend angepaßt wird.

Bei dem gezeigten Beispiel könnte beispielsweise die Grundplatte 1 aus 4 mm dickem PVC mit den Abmessungen 175 × 95 mm vorgesehen sein. Der Behälter zum Einfüllen der Lötmasse könnte eine Höhe von 45 mm bei einem Außendurchmesser von 50 mm und einer Wanddicke von 3 mm aufweisen. Der Rahmen für die Aufnahme des Salmiaksteins könnte für einen Salmiakstein von beispielsweise 80 × 50 mm bei einer Wanddicke von 3 mm Außenabmessungen von 86 × 56 mm aufweisen. Schließlich könnte das Rohrstück für die Aufnahme des Pinsels eine Länge von 30 mm bei einem Durchmesser von 10 mm und einer Wanddicke von 1,5 mm haben. Alle Teile könnten mit der Grundplatte verklebt oder auch einstückig mit dieser geformt sein.

Die rutschfeste Unterlage, beispielsweise eine Gummiplatte, könnte eine Dicke von z.B. 6 mm aufweisen und mit der Grundplatte verklebt sein. Anstelle dessen können die Grundplatte und die rutschfeste Unterlage längs einer Seite mittels eines Scharniers oder dergleichen gelenkig untereinander verbunden sein, so daß sie sich winklig auseinanderklappen lassen. Dazu wird zweckmäßig eine einstellbare Ausstellvorrichtung vorgesehen, wodurch es möglich ist, sich an unterschiedliche Schrägen anzupassen, d.h. die Lage der Grundplatte stets zumindest angenähert horizontal einzustellen.

**Patentansprüche**

1. Lötgarnitur für Montagearbeiten mit auf einer Grundplatte (1) ausgebildetem Rahmen (4) für die Aufnahme von Werkzeugen, dadurch gekennzeichnet, daß der Rahmen (4) für die Aufnahme eines Salmiaksteins (3) ausgebildet ist, daß auf der Grundplatte (1) ein offener Behälter (5) für ein flüssiges Löthilfsmittel aus gegen dieses beständigem Kunststoff sowie eine Befestigung für einen Lötwasserpinsel angeordnet und ausgebildet sind, und daß die Grundplatte (1) ferner mit einer rutschfesten Unterlage (2) aus Elastomeren, insbesondere aus geschäumten Elastomeren versehen ist, wobei die Grundplatte (1) und die rutschfeste Unterlage (2) längs einer Seite, vorzugsweise längs einer Längsseite, mittels eines Scharniers oder dergleichen auseinanderklappbar verbunden sind und eine Ausstellvorrichtung zum einstellbaren winkligen Auseinanderklappen der Grundplatte (1) und der rutschfesten Unterlage (2) aufweisen.

2. Lötgarnitur nach Anspruch 1, dadurch gekennzeichnet, daß sie als Ganzes aus einem gegen Salzsäure beständigen Kunststoff besteht.

3. Lötgarnitur nach Anspruch 1 oder 2, gekennzeichnet durch eine Halterung für eine Lötwasserflasche.

4. Lötgarnitur nach Anspruch 1 oder 2, gekennzeichnet durch einen an der Grundplatte (1) befestigten, insbesondere angeformten, Vorratsbehälter mit einem Hahn zum direkten Nachfüllen von flüssigem Löthilfsmittel in dem offenen Behälter (5).

5. Lötgarnitur nach einem der Ansprüche 1 bis 4, gekennzeichnet durch einen Deckel zum Verschließen des Rahmens (4) für den Salmiakstein (3).

6. Lötgarnitur nach Anspruch 5, dadurch gekennzeichnet, daß der Deckel schwenkbar am Rahmen (4) befestigt ist.

7. Lötgarnitur nach Anspruch 6, dadurch gekennzeichnet, daß der Deckel als über den Rahmen (4) stülpbare Haube ausgebildet ist.

8. Lötgarnitur nach einem der Ansprüche 1 bis 7, dadurch gekennzeichnet, daß die Befestigung (6) für den Lötwasserpinsel als beidseitig offenes Röhrchen ausgebildet ist.

9. Lötgarnitur nach Anspruch 8, dadurch gekennzeichnet, daß das Röhrchen (6) neben dem Rahmen (4) auf der Grundplatte (1) befestigt ist.

10. Lötgarnitur nach Anspruch 8 oder 9, dadurch gekennzeichnet, daß das zum Behälter (5) für die Aufnahme des Löthilfsmittels hin gerichtete Ende des Röhrchens (6) unter einem Winkel von 45° abgeschrägt ist.

**Claims**

1. Soldering equipment for erection work with a frame (4) for holding tools which is formed on a base plate (1), characterised in that the frame (4) is designed to hold a soldering stone (3), that an open container (5) for a liquid soldering aid, made of plastic resistant to said aid, and an attachment for a soldering fluid brush are disposed and formed on the base plate (1), and that the base plate (1) is additionally provided with a non-slip backing (2) made of elastomers, in particular of foamed elastomers, the base plate (1) and the non-slip backing (2) being connected by means of a hinge or the like along one side, preferably along one longitudinal side, so as to be able to unfold and having a display device for the adjustable angled unfolding of the base plate (1) and the non-slip backing (2).

2. Soldering equipment according to Claim 1, characterised in that it consists entirely of a plastic which is resistant to hydrochloric acid.

3. Soldering equipment according to Claim 1 or 2, characterised by a holder for a soldering fluid bottle.

4. Soldering equipment according to Claim 1 or 2, characterised by a storage container attached to, in particular formed on, the base plate (1) and having a tap for directly refilling liquid soldering aid into the open container (5).

5. Soldering equipment according to one of Claims 1 to 4, characterised by a lid for closing the frame (4) for the soldering stone (3).

6. Soldering equipment according to Claim 5, characterised in that the lid is pivotably attached to the frame (4).

7. Soldering equipment according to Claim 6, characterised in that the lid is designed as a cap which can be inverted over the frame (4).

8. Soldering equipment according to one of Claims 1 to 7, characterised in that the attachment (6) for the soldering fluid brush is designed as a tube which is open at both ends.

9. Soldering equipment according to Claim 8, characterised in that the tube (6) is attached next to the frame (4) on the base plate (1).

10. Soldering equipment according to Claim 8 or 9, characterised in that the end of the tube (6) which points towards the container (5) for holding the soldering aid is angled at an angle of 45°.

**Revendications**

1. Ensemble de soudure pour travaux d'assemblage avec un cadre (4) formé sur une plaque de base (1) pour la réception d'outils, caractérisé en ce que le cadre (4) est formé en vue de recevoir le mipoux (3), que, sur la plaque de base (1), sont disposés et formés un récipient ouvert (5) pour un agent auxiliaire liquide de soudure, récipient réalisé en matière synthétique résistante et un moyen de fixation pour le pinceau du liquide de décapage, et que la plaque de base (1) est en outre pourvue d'une couche de fond antidérapante (2) en élastomères, en particulier en élastomères cellulaires, par laquelle la plaque de base (1) et la couche de fond antidérapante (2) sont reliées le long d'un côté, de préférence le long d'un grand côté, au moyen d'une charnière ou d'un élément similaire de manière à pouvoir être repliées l'une sur l'autre et présentent un dispositif d'orientation pour le basculement angulaire ajustable de la plaque de base (1) et de la couche de fond antidérapante (2).

2. Ensemble de soudure selon la revendication 1, caractérisé en ce quil est constitué dans son ensemble d'une matière synthétique résistant à l'acide chlorhydrique.

3. Ensemble de soudure selon la revendication 1 ou 2, caractérisé par un moyen d'attache pour la bouteille de liquide de décapage.

4. Ensemble de soudure selon la revendication 1 ou 2, caractérisé par un réservoir de stockage fixé à la plaque de base (1), en particulier fixé par moulage, avec un robinet pour le remplissage direct du récipient ouvert (5) avec du liquide de décapage.

5. Ensemble de soudure selon l'une des revendications 1 à 4, caractérisé par un couvercle pour fermer le cadre (4) pour le mipoux (3).

6. Ensemble de soudure selon la revendication 5, caractérisé en ce que le couvercle est monté sur le cadre (4) de manière pivotable.

7. Ensemble de soudure selon la revendication 6, caractérisé en ce que le couvercle a la forme d'une calotte susceptible de coiffer le cadre (4).

8. Ensemble de soudure selon l'une des revendications 1 à 7, caractérisé en ce que le moyen de fixation (6) pour le pinceau du liquide de décapage présente la forme d'un petit tube ouvert des deux côtés.

9. Ensemble de soudure selon la revendication 8, caractérisé en ce que le petit tube (6) est fixé à côté du cadre (4) sur la plaque de base (1).

10. Ensemble de soudure selon la revendication 8 ou 9, caractérisé en ce que le bout du petit tube (6) dirigé vers le récipient (5), destiné à recevoir l'agent auxiliaire de soudure, est biaisé sous un angle de 45°.

EP 0 226 809 B1